# EUROPÄISCHE PATENTANMELDUNG

(11) **EP 2 159 026 A1**
(43) Veröffentlichungstag der Anmeldung: **03.03.2010**
(21) Anmeldenummer: 08405209.1
(22) Anmeldetag: 29.08.2008
(51) Int. Cl.: B28D 7/04, B28D 5/04, B23D 57/00

(54) **Vorrichtung zum Halten säulenförmiger Werkstücke und Verwendung der Vorrichtung**

(71) Anmelder: Meyer Burger AG, 3600 Thun (CH)
(72) Erfinder: Danner, Markus, 3126 Kaufdorf (CH); Fricker, Daniel, 3612 Steffisburg (CH); Gurtner, Christoph, 3612 Steffisburg (CH)
(74) Vertreter: AMMANN PATENTANWÄLTE AG BERN

(57) **Zusammenfassung**

Eine Vorrichtung (20) zum Halten eines Werkstücks (3), insbesondere eines säulenförmigen Silizium-Ingots, umfasst zwei sich gegenüberstehenden Halterungsköpfe (22, 24), die je über mindestens zwei Spannelemente (28) verfügen. Durch Andrücken der Spannelemente (28) auf die Stirnflächen des Werkstücks (3) wird eine Fixierung des Werkstücks (3) zwischen den Halterungsköpfen (22, 24) erzielt. Die Verwendung von mindestens zwei Spannelementen (28) je Kopf (22, 24) gestattet es, zwischen diesen ein Trennmittel (29) hindurchzuführen, um einen oder eine Mehrzahl von Längsschnitten durch das Werkstück (3) durchzuführen, um dieses in zwei oder mehr ebenfalls säulenförmige Teile zu trennen. Dabei ist auch nach Durchführen des Schnittes eine Aufspannung der Werkstückteile gewährleistet.

## Beschreibung

Die vorliegende Erfindung betrifft eine Vorrichtung zum Halten eines säulenförmigen Werkstücks gemäss Oberbegriff des Anspruchs 1. Weiter betrifft die Erfindung auch eine Verwendung der Vorrichtung.

Eine bekannte Form von Halbleiter-Ingots, z. B. aus monokristallinem Silizium für photovoltaische Anwendungen, sind Säulen einer Länge von üblicherweise etwa 80 cm bis zu 2,5 m Länge und herstellungsbedingt kreisförmigem Querschnitt. Die weitere Verarbeitung besteht zunächst darin, dass aus einer solchen Säule eine quadratische Säule herausgesägt wird, das sogenannte Quadrieren. Der Querschnitt der so erhaltenen Säulen, der Bricks, ist quadratisch mit einer Kantenlänge von 156 mm. Bei diesem Schritt werden peripher relativ voluminöse Leisten mit kreisabschnittförmigem Querschnitt abgetrennt. Für den Sägevorgang wird das Werkstück (der Ingot) zwischen zwei Träger geklebt. Der Kleber stellt dabei an sich ebenfalls ein Problem dar. Er verunreinigt die entsprechende Fläche und muss vor der Weiterverarbeitung gelöst und die Fläche gereinigt werden. Rückstände sind jedoch unvermeidbar, so dass beim Recycling die Materialqualität beeinträchtigt wird.

Ein neues Herstellungsverfahren für Ingots ergibt Säulen aus multikristallinem Silizium mit im Wesentlichen quadratischen Querschnitt, der auch grösser ist als bei den herkömmlichen Säulen. In einer bekannten Ausführung ist die Fläche des Querschnitts über viermal so gross wie bei den bisherigen Ingots, d. h. die Kantenlänge ist grösser als das Doppelte von 156 mm. Diese neueren Roh-Ingots könnten daher prinzipiell in vier Bricks von 156 mm Kantenlänge zerlegt werden. Die bisherige Klebetechnik ist jedoch für ein solches Zertrennen in Längsrichtung, das auch noch in zwei senkrecht zueinander verlaufenden Schnittrichtungen erfolgen muss, mit schwerwiegenden Nachteilen behaftet bzw. überhaupt nicht einsetzbar. Namentlich wäre die geforderte Präzision kaum einzuhalten.

Eine Aufgabe der vorliegenden Erfindung besteht daher darin, eine Vorrichtung zum Halten eines säulenförmigen Werkstückes für dessen Durchtrennen in Längsrichtung ohne Kleben anzugeben.

Eine Vorrichtung, die diese Aufgabe erfüllt, ist im Anspruch 1 angegeben. Die weiteren Ansprüche geben bevorzugt Ausführungsformen und Verwendungen der Vorrichtung an.

In der vorliegenden Beschreibung wie auch den angefügten Ansprüchen sollen folgende Definitionen gelten:
- **Säulenförmiges Werkstück**: Ein Werkstück mit einer Ausdehnung in einer Raumrichtung, der Längsrichtung, und einem Querschnitt senkrecht zur Längsachse. Zusätzliche, die Form bestimmende Angaben wie **quadratisch, kreisförmig, polygonal**, definieren den Querschnitt eines solchen Werkstücks.
- **Trennelement**: Ein Säge- oder Trennmittel für das Durchtrennen eines Werkstücks, z. B. ein Sägeband oder ein Sägedraht.

Erfindungsgemäss wird die bekannte Klebung des Werkstücks, insbesondere eines Halbleiter-Ingots durch eine Aufspannung zwischen zwei Halterungsköpfen ersetzt. Die Köpfe weisen dabei Spannelemente auf, deren Stirn an das Werkstück angedrückt wird. Mit einem vorgegebenen Andruck wird eine hinreichende Verbindung zwischen Spannelementen und Werkstück erzielt (bevorzugt Reibschluss, aber andere Verbindungsarten sind denkbar), dass das Werkstück während des Trennvorgangs sicher gehalten ist, auch in der bevorzugten horizontalen Lage, d. h. mit der Längsachse in horizontaler Ausrichtung.

Für den im Wesentlichen zentral durch das Werkstück verlaufenden Schnitt kann das Trennmittel zwischen Haltekopf und Werkstück eingelegt werden, da die Spannelemente einen Spalt zwischen Haltekopf und Werkstück für das Trennmittel gewährleisten.

In einer bevorzugten Ausführungsform sind die Spannelemente einzeln ein- und ausfahrbar. Dadurch wird ermöglicht, dass das Trennelement seitlich zwischen eingezogenem Spannelement und Werkstück hindurchgefahren und über der Schnittlinie positioniert werden kann.

Mit der bevorzugten Ausführungsform ist auch ein automatisiertes Aneinanderreihen von Längsschnitten in verschiedenen Ausrichtungen relativ zueinander möglich. Nach einem Schnitt kann das Trennmittel nicht sofort aus dem Bereich zwischen Werkstückstirn und Halterungskopf herausgefahren werden, da hierfür die Spannelemente zurückgefahren werden müssten, die ein abgetrenntes Teil des Werkstücks halten. Durch Einfahren diametral gegenüberliegender Spannelemente ist es jedoch möglich, die bereits voneinander getrennten Teile des Werkstücks weiterhin zu halten und gleichzeitig eine Drehung des Werkstücks um seine Längsachse durchzuführen. Dadurch wird das Trennmittel relativ zum gerade durchgeführten Schnitt verdreht, und es ist möglich, durch Zurückziehen anderer Spannelemente die Aufspannung aufrecht zu erhalten und gleichzeitig das Trennmittel aus dem Arbeitsbereich herauszufahren. Es kann dann in die Anfangsposition zurückgefahren und auf die genannte Art und Weise durch Lösen von Spannelementen am anderen Ende wieder in die neue Schnittposition gebracht werden, um den nächsten Schnitt durchzuführen.

Die Erfindung wird weiter an einem bevorzugten Ausführungsbeispiel, das noch weitere vorteilhafte Eigenschaften und Vorteile zeigt, unter Bezugnahme auf Figuren erläutert.

Es zeigen:
Fig. 1 Ansicht auf die Stirn eines Silizium-Ingots mit gestrichelt angedeuteten Schnittlinien
Fig. 2 Ansicht auf einen Ingot mit Sägedrahtnetz
Figg. 3 - 4 Ansicht auf einen einfach geteilten Ingot
Fig. 5 Seitenansicht einer erfindungsgemässen Vorrichtung
Fig. 6 Fig. 5, Vorrichtung teilweise geschnitten
Fig. 7 Vergrösserte Seitenansicht eines Spannelements der Vorrichtung
Fig. 8 Schnitt durch ein Spannelement gemäss Fig. 7
Figg. 9 - 13 In einer Darstellung ähnlich Fig. 5 eine Abfolge von Zuständen der erfindungsgemässen Vorrichtung

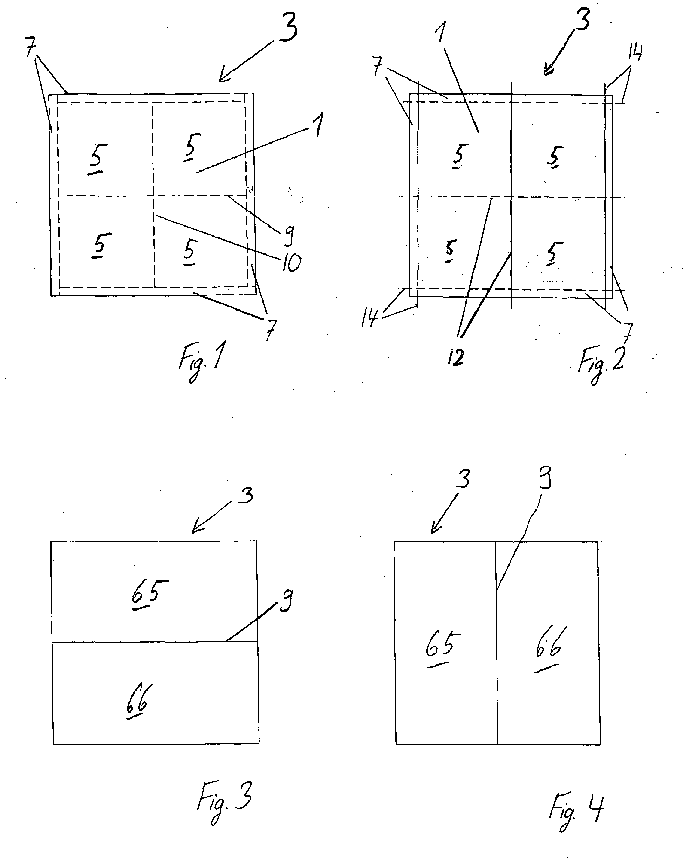

Fig. 1 zeigt eine Aufsicht auf die Stirnfläche 1 eines Ingots 3 aus Silizium gemäss neuerer Fertigung. Der Ingot 3 weist einen nahezu quadratischen Querschnitt auf. Die Kantenlänge beträgt mehr als das Doppelte der Breite von 156 mm der Bricks, die für die Herstellung von beispielsweise Solarzellen üblich ist. Die gestrichelten Linien in Fig. 1 zeigen die Schnitte an, die vorzunehmen sind, um aus dem Ingot 3 vier derartige 156 mm-Bricks 5 für die Weiterverarbeitung herauszutrennen. Die Randbereiche 7, genannt Schwarten, werden dabei abgetrennt und rezykliert, da sie verunreinigt sind.

Grundsätzlich denkbar ist es, in einer stationären Aufspannung eines Ingots wenigstens die Vierteilungsschnitte, d. h. den horizontalen Schnitt 9 und den vertikalen Schnitt 10, mittels zwei hintereinander gleichzeitig durch den Ingot hindurchgeführten Sägedrähten 12 durchzuführen. Die Abtrennung der Schwarten 7 durch peripher geführte Sägedrähte 12 kann parallel dazu oder zeitlich versetzt erfolgen. Denkbar ist eine zeitlich aufeinanderfolgende Arbeitsweise, wobei die Drähte 12 und 14 identisch sind und ein einziges Drahtpaares entsprechend verschoben wird. Fig. 2 zeigt ein Drahtnetz aus Drähten 12 und 14 für ein Zertrennen eines Ingots in vier Bricks 5 bei gleichzeitigem Abtrennen der Schwarten 7, wobei die gestrichelt angedeuteten Drähte vor den durchgezogen dargestellten Drähten laufen. Diese Anordnung stellt jedoch nur ein bevorzugtes Beispiel dar und andere Anordnungen in Längsrichtung des Ingots 3 sind denkbar.

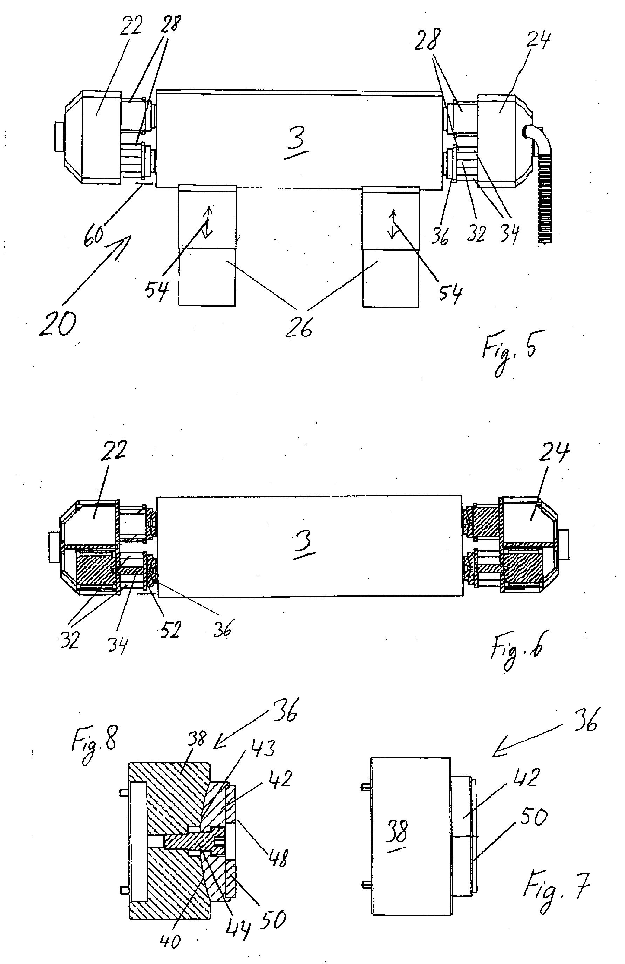

Fig. 5 zeigt eine Seitenansicht einer erfindungsgemässen Vorrichtung 20 zur Halterung eines Ingots 3. Sie umfasst einen linken Halterungskopf 22 und einen rechten Halterungskopf 24 sowie eine Auflage 26. Die Auflage 26 nimmt die jeweils unten abgetrennte Schwarte auf, kann jedoch auch dazu dienen, den Ingot 3 zwischen den Halterungsköpfen 22 und 24 zu referenzieren, d. h. in die vordefinierte Arbeitsposition zu bringen. Haltevorrichtungen für die seitlich abgetrennten Schwarten bzw. eine Greifvorrichtung für die oben abgetrennte Schwarte sind auf an sich übliche Art ausgeführt und daher nicht dargestellt. In der noch beschriebenen zweiten Ausführungsform sind die Halterungsköpfe 22, 24 jedoch eingerichtet, den Ingot 3 um seine Längsachse zu drehen, so dass nacheinander jeweils die untere Schwarte in aufeinanderfolgenden Schnitten abgetrennt werden kann und somit auf seitliche und obere Schwartenaufnahmen verzichtet werden kann.

Die Halterungsköpfe 22, 24 weisen jeweils vier Spannelemente 28 in quadratischer Anordnung auf. Die Spannelemente sind somit etwa so angeordnet, dass ihre Stirnflächen 30 in etwa zentral auf je eine Stirnfläche eines zukünftigen Bricks 5 aufliegt. Die Spannelemente 28 sind in ihrer Länge verstellbar. Bevorzugt handelt es sich um geführte Pneumatikzylinder. Charakteristisch an solchen Pneumatikzylindern sind die seitlichen Führungsstangen 32 und der zentrale, durch Luftdruck betriebene Kolben 34 (s. Fig. 6). Derartige Pneumatikzylinder sind an sich bekannt.

Die Spannelemente 28 weisen zur Anlage an das Werkstück, den Ingot 3, einen Andruckkopf 36 auf, der in den Figg. 7 und 8 vergrössert dargestellt ist. Eine Trägerplatte 38 ist mit einer sphärischen Vertiefung 40 ausgestattet. Darin liegt ein Andruckteil 42, das an seiner Rückseite eine Bombierung 43 komplementär zur Vertiefung 40 aufweist. Das Andruckteil 42 ist durch eine Schraube 44, die in die Trägerplatte 38 eingeschraubt ist, in der Vertiefung 40 gehalten. Die Schraube 44 ist jedoch so im Trägerteil 40 fixiert und das Andruckteil 42 so ausgebildet, dass um die Schraube 44 im Andruckteil 42 ein gewisses Spiel besteht. Das Andruckteil 42 ist damit in geringem Ausmass beweglich und kann sich damit an geringfügige Unregelmässigkeiten eines Ingots 3 durch Verschwenken in der Vertiefung 40 anpassen. Damit ist gewährleistet, dass sich die Auflagefläche 48 plan an die Oberfläche eines Ingots 3 anlegen kann.

Die Auflagefläche 48 ist mit einer harten Gummiauflage 50 versehen, um einen hochwertigen Reibschluss zu gewährleisten. Gleichzeitig verhindert die Auflage 50 einen direkten Kontakt zwischen dem Andruckteil 42, das aus Stahl besteht, mit dem Silizium des Ingots 3.

Die Gummiauflage kann aus einem natürlichen oder synthetischen Gummi bestehen. Geeignete Materialien sind an sich bekannt.

Der Andruckkopf 36 ist auf einer Montageplatte 52 befestigt.

Mit der beschriebenen Anordnung ist es möglich, einen Ingot 3 mittels der Auflage 26 zwischen den Halterungsköpfen 22, 24 zu positionieren und dann durch Ausfahren der Spannelemente 28 einzuspannen. Zum Abtrennen der Schwarten 7 können nun Trennelemente peripher in Längsrichtung durch den Ingot 3 geführt werden. Ausserdem können Trennelemente zwischen den Spannelementen 28 hindurchgefädelt werden, um die zentralen Schnitte 9, 10 auszuführen und damit eine Vierteilung des Ingots 3 zu bewirken. Insbesondere ist es denkbar, zwischen Ingot 3 und z. B. linkem Halterungskopf 22 ein Drahtnetz aus Sägedrähten 14, 12 (s. Fig. 2) aufzubauen und dieses in einem einzigen Durchgang durch den Ingot 3 zu führen, wonach direkt eine Anordnung aus 4 voneinander getrennten Bricks 5 erhalten wird. Offensichtlich ist dabei jeder Brick 5 immer noch durch jeweils ein Paar gegenüberliegender Spannelemente 28 gehalten. Durch Ergreifen eines Bricks und Lösen eines entsprechenden Spannelementepaars können die Bricks einzeln entnommen werden. In einer bevorzugten Ausführungsform sind jedoch die Spannelemente 28 jeweils zusammen drehbar im Kopf 22 bzw. 24 gelagert. Damit kann der aufgespannte Ingot 3 um seine Längsachse gedreht werden. Im Rahmen der vorangehenden Beschreibung ist damit Folgendes möglich:
1. Jeweils nur die unten liegende Schwarte wird abgetrennt, so dass diese auf die Auflage 26 aufliegt und durch Einziehen der Auflage (Zeile 54) vom Ingot weggefahren werden kann.
2. Eine oder auch beide untenliegende Bricks werden auf der Ablage 26 abgelegt und wie die Schwarten gemäss 1. nach unten gefahren. Nach Drehen der Spannelemente um 180° gelangen die oben liegenden Bricks in die untere Lage und können ebenfalls mit der Auflage 26 aufgenommen und aus der Haltevorrichtung herausgefahren werden. Denkbar ist jedoch auch, jeweils nur eine Drehung um 90° durchzuführen und jeweils nur einen Brick 5 zu entnehmen. Denkbar ist auch, die Bricks 5 von oben mittels einer Greifvorrichtung zu entnehmen.

Diese oben beschrieben Ausführungsform und Verwendung der Vorrichtung erfordert jedoch noch das manuelle Einfädeln von Sägedraht zwischen den Spannelementen 28 für das Durchführen der zentralen Schnitte 9, 10. Ausserdem ist eine grösstmögliche Präzision der Schnitte gewünscht, wofür Bandsägen besser geeignet sind. Beispielsweise ist eine Abweichung der Kantenlänge über die gesamte Länge von +/- 0,2 mm einzuhalten. Dieselbe Toleranz wird für die Parallelität der Schnitte gefordert und die Rauhigkeit Ra der Schnittflächen sollte höchstens 0,0009 mm betragen. Als Maximalwerte für die angegebenen Toleranzen können jeweils 0,5 mm angesehen werden, für die Oberflächenrauhigkeit Ra 0,002 mm. Daneben wird auch auf möglichst geringe Schnittverluste Wert gelegt und als Maximalwert dafür kann von 2 mm ausgegangen werden, übliche Werte betragen 0,7 - 0,9 mm.

Mit der vorgenannten Einrichtung inklusive der Möglichkeit den Ingot 3 zu Drehen und die Spannelemente 28 individuell auszufahren, ist ein auch vollautomatisches Sägen und Trennen eines Ingots 3 in Bricks 5 mit einer Bandsäge möglich, wie nachfolgend beschrieben.

Die Spannelemente 28 der Halterungsvorrichtung 20 sind zurückbezogen. Ein Werkstück, d. h. ein Silizium-Ingot 3, wird mittels der Auflage 26 zwischen den Halterungsköpfen 22, 24 referenziert, d. h. in die Arbeitsposition gefahren (s. Pfeile 54). Die Spannelemente 28 werden ausgefahren und das Sägeband 60 in die Ausgangsposition für das Abtrennen der unteren Schwarte gefahren, wonach sich die Konfiguration gemäss Fig. 5 ergibt.

Es wird durch viermaliges Wiederholen der folgenden Schritte die jeweils unten liegende Schwarte entfernt. Dazu wird das Sägeband 60 in Fig. 5 nach rechts bewegt. Die abgetrennte Schwarte wird mittels der Auflage 26 nach unten weggefahren, der Ingot 3 um 90° um seine Längsachse gedreht, das Sägeband 60 in die linke Ausgangsposition zurückgefahren und die Auflage 26 nach Entfernen der abgetrennten Schwarte wieder nach oben gefahren, um die nächste Schwarte aufzufangen.

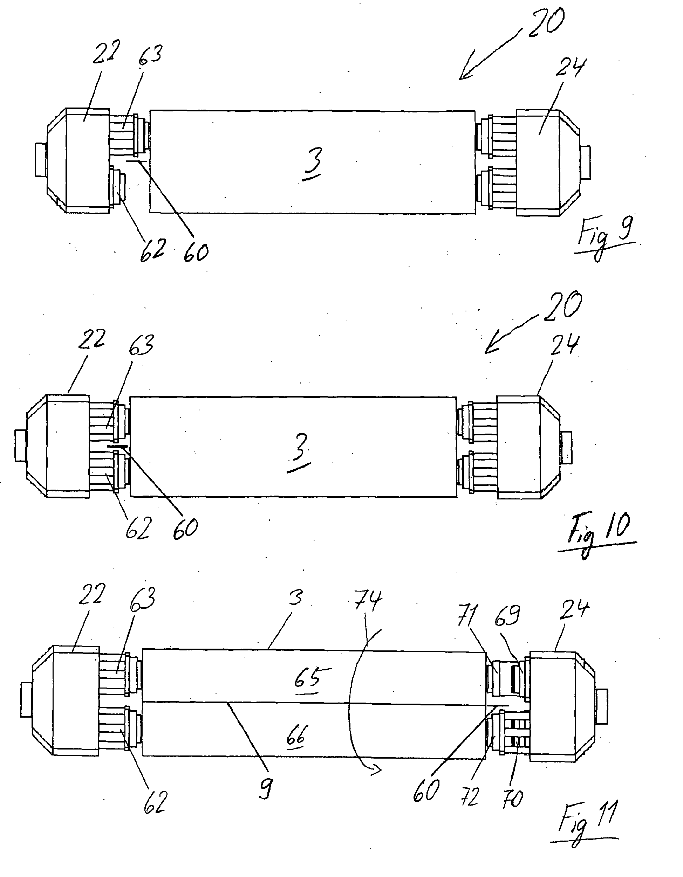

Nach dem Entfernen der vierten Schwarte und Zurückfahren des Sägebands 60 in die Ausgangsposition beim linken Halterungskopf 22 werden die beiden unteren Spannelemente 62 des linken Kopfs 22 eingezogen und das Sägeband 60 durch den so entstandenen Spalt zur Position der zentralen horizontalen Schnittlinie 9 gefahren (Fig. 9). Der Ingot 3 wird durch die oberen Spannelemente 63 des linken Kopfes gehalten.

Die unteren Spannelemente 62 werden wieder ausgefahren (Fig. 10) und der Schnitt 9 durchgeführt, wonach sich der durchgeschnittene Ingot 3 gemäss Fig. 3 ergibt. Er ist nun in eine obere Hälfte 65 und eine untere Hälfte 66 durch einen Längsschnitt 9 unterteilt. Offensichtlich ist es nun nicht mehr möglich, das Sägeband 60 nach unten oder oben aus der Halterungsvorrichtung 20 herauszufahren, da dazu ein oberes oder unteres Paar von Spannelementen 28 gelöst werden müsste, wonach eine der beiden Hälften 65, 66 nicht mehr gehalten wäre.

Es werden nun am rechten Halterungskopf 24 das vordere obere Spannelement 69 und das hintere untere Spannelement 70, die sich diametral gegenüberstehen, zurückgezogen (Fig. 11). Die obere Hälfte 65 wird damit immer noch durch das hintere obere Spannelement 71 des rechten Kopfs 24 gehalten, wobei die beiden gegenüberliegenden oberen Spannelemente 62 des linken Kopfes eine Drehbewegung verhindert. Entsprechend wird die untere Hälfte 66 durch das vordere untere Spannelement 72 des rechten Kopfes 24 in Verbindung mit den unteren Spannelementen 62 des linken Kopfes 22 sicher gehalten.

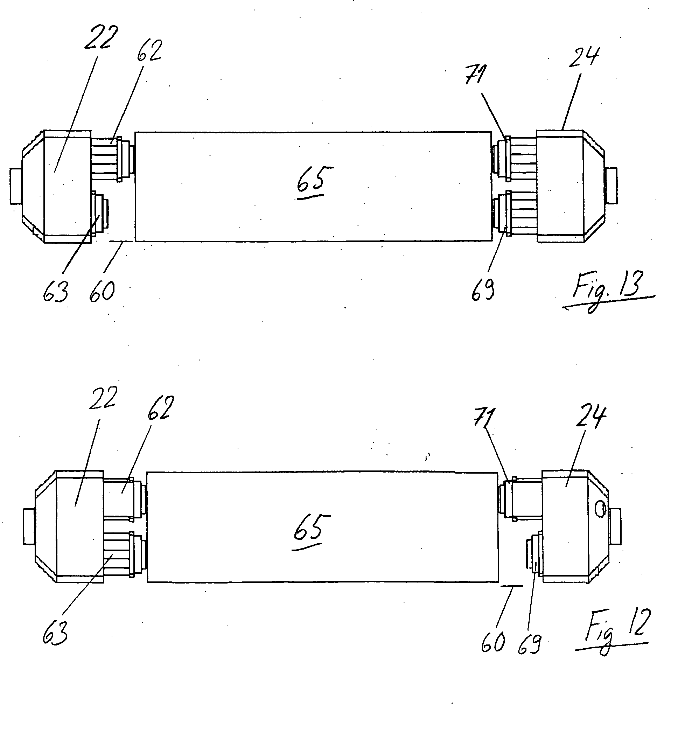

Der Ingot 3 wird nun gemäss Pfeil 74 gedreht, wobei die zurückgezogenen Halteelemente 69, 71 hinter dem Sägeband 60 vorbeibewegt werden. Wie Fig. 4 zeigt, wird damit die Schnittlinie 9 senkrecht gestellt. Das Sägeband ist nun in der grundsätzlichen Position, den noch fehlenden anderen Zentralschnitt 10, der nun waagrecht verläuft, vorzunehmen. Wie in Fig. 12 dargestellt können nach Ausfahren des zurückgefahrenen Spannelements 70 nun die unteren Spannelemente, d. h. das ehemalige vordere Spannelement 69 und untere vordere Spannelement 72 (verdeckt hinter dem Spannelement 69), gelöst und das Sägeband 60 nach unten herausgefahren werden. Das Sägeband wird zum linken Halterungskopf 22 bewegt und dessen untere Spannelemente 62 (vor der Drehung: das jeweils vordere Spannelement des oberen und unteren Spannelementpaares) zurückgefahren (Fig. 13). Das Sägeband kann nun in die Ausgangsposition für den nun horizontal verlaufenden, zweiten zentralen Schnitt 10 gefahren werden. Nach Durchführen dieses Schnitts können die beiden unteren Bricks 5 nacheinander oder gleichzeitig von der Auflage 26 aufgenommen und weggefahren werden. Das Sägeband 60 ist damit frei und kann aus der Vorrichtung herausgefahren werden, wonach auch die beiden oberen Bricks nach Drehung um die Längsachse von der Auflage 26 aufgenommen werden können. Aus der vorangehenden Beschreibung von Ausführungsbeispielen sind dem Fachmann zahlreiche Abwandlungen und Ergänzungen zugänglich, ohne den Schutzbereich der Erfindung zu verlassen, der durch die angefügten Ansprüche definiert ist. Denkbar ist insbesondere:
- Das Durchführen des Sägens mit vertikal oder anderweitig orientiertem Ingot 3;
- Durchführen der Relativbewegung insbesondere zwischen Trennmittel und Halterungsvorrichtung auch andere Art als durch Bewegen des Trennmittels, z. B. durch Bewegen der Haltervorrichtung;
- Verwendung eines anderen als eines pneumatischen Antriebs für die Spannelemente, z. B. hydraulisch oder elektrisch.
- Realisierung der Spannelemente durch eine Anordnung von Andruckgliedern.
- Andere Lagen oder eine andere Anzahl von Schnitten, gegebenenfalls mit entsprechend angepasster anderer Anzahl und Anordnung von Spannelementen.
- Denkbar ist, das Gitternetz gemäss Fig. 2 vor dem Einspannen des Ingots zwischen den Spannelementen zu positionieren, wodurch das Einfädeln der Sägedrähte zwischen den Spannelemente vermieden wird.

## Patentansprüche

1. Vorrichtung (20) zum Halten eines säulenförmigen Werkstücks (3) für das Durchtrennen des Werkstücks in Längsrichtung mittels Trennmitteln (12, 14; 60), **dadurch gekennzeichnet, dass** zwei sich im Wesentlichen gegenüberstehende Halterungsköpfe (22, 24) vorhanden sind und die Halterungsköpfe je mindestens zwei Spannelemente (28) aufweisen, um zwischen den Spannelementen wenigstens ein Trennmittel für einen Schnitt in Längsrichtung des Werkstückes anordnen zu können.

2. Vorrichtung (20) gemäss Anspruch 1, **dadurch gekennzeichnet, dass** mindestens vier Spannelemente (28) vorhanden sind, um wenigstens zwei der Trennmittel (12, 14) zwischen den Spannelementen und sich ungefähr mittig zum Werkstück kreuzend anordnen zu können und eine Vierteilung des Werkstücks in Längsrichtung in einem Durchlauf der Trennmittel (12, 14; 60) zu ermöglichen.

3. Vorrichtung (20) gemäss einem der Ansprüche 1 - 2, **dadurch gekennzeichnet, dass** die Spannelemente (28) in der Länge verstellbar sind, um sie vom Werkstück abheben und ein Trennelement (12, 14; 60) zwischen Werkstück und abgehobenen Spannelementen hindurchbewegen zu können.

4. Vorrichtung (20) gemäss einem der Ansprüche 1 - 3, **dadurch gekennzeichnet, dass** die zur Anlage an das Werkstück (3) vorgesehene Auflagefläche (48) der Spannelemente (28) mit einem natürlichen oder künstlichen Gummi (50) beschichtet ist, um eine Verletzung der Werkstückoberfläche zu vermeiden und einen höheren Reibungskoeffizienten zwischen Auflagefläche und Werkstück sicherzustellen.

5. Vorrichtung (20) gemäss einem der Ansprüche 1 - 4, **dadurch gekennzeichnet, dass** der zur Anlage an das Werkstück (3) vorgesehene Andruckkopf (36) der Spannelemente (28) einen Träger (38) und ein darauf schwenkbar angeordnetes Andruckteil (42) umfasst, wobei das Andruckteil eine Auflagefläche (48) aufweist, die zur Anlage an das Werkstück ausgebildet ist, um eine plane Anlage der Auflagefläche auf das Werkstück sicherzustellen.

6. Vorrichtung (20) gemäss Anspruch 5, **dadurch gekennzeichnet, dass** die Schwenkbarkeit des Andruckteils (42) von einer Extremlage zur gegenüberliegenden höchstens 10° beträgt.

7. Vorrichtung (20) gemäss einem der Ansprüche 1 - 6, **dadurch gekennzeichnet, dass** die Spannelemente (28) der Halterungsköpfe (22, 24) drehbar um eine gemeinsame Achse angeordnet sind, um ein in der Vorrichtung gehaltenes Werkstück (3) um seine Längsachse drehen zu können.

8. Verwendung der Vorrichtung gemäss einem der Ansprüche 1 - 7 zum Durchtrennen eines im Wesentlichen säulenförmigen Werkstücks (3) in wenigstens zwei Teile (65, 66; 5) in seiner Längsrichtung, **dadurch gekennzeichnet, dass**
- das Werkstück (3) in der Vorrichtung eingespannt wird, die Spannelemente (28) in Anlage an das Werkstück gebracht werden,
- wenigstens ein Trennelement (12; 60) zwischen wenigstens zweien der Spannelemente des einen Halterungskopfes (22) hindurchgeführt wird,
- das Trennmittel in den Arbeitszustand versetzt und in Längsrichtung durch das Werkstück hindurchgeführt wird, bis es am gegenüberliegenden Ende des Werkstücks nach dessen Durchtrennen in Längsrichtung austritt.

9. Verwendung gemäss Anspruch 8, **dadurch gekennzeichnet, dass** mindestens zwei Trennelemente (12) verwendet werden, die im Wesentlichen senkrecht zueinander und sich im Wesentlichen in der Mitte des Querschnitts des Werkstücks (3) kreuzend ausgerichtet sind, so dass das Werkstück in wenigstens vier Teile in Längsrichtung zerteilt wird.

10. Verwendung der Vorrichtung (20) gemäss einem der Ansprüche 3 - 7 zum Zerteilen eines säulenförmigen Werkstücks (3), insbesondere eines Silizium-Ingots, in wenigstens zwei Teile (65, 66; 5) wobei jeder Halterungskopf (22, 24) wenigstens zwei Spannelemente (28) aufweist, und wobei folgende Schritte durchgeführt werden:
a) Ein Werkstück wird in die Vorrichtung eingespannt, in dem die Spannelemente (28) in Anlage an das Werkstück gebracht werden;
b) wenigstens ein Spannelement des einen Halterungskopfes (22) wird zurückgezogen;
c) zwischen dem zurückgezogenen Spannelement und dem Werkstück wird ein Trennelement (60) hindurchbewegt;
d) das Spannelement wird wieder an das Werkstück angedrückt;
e) das Werkstück wird mittels des Trennelementes in Längsrichtung in zwei Teile (65, 66) zertrennt, wonach das Trennelement zwischen den Spannelementen des anderen Halterungskopfes (24) verläuft.

11. Verwendung gemäss Anspruch 10, **dadurch gekennzeichnet, dass** das Werkstück (3) in wenigstens vier Teile zerteilt wird, wobei die Halterungsköpfe (22, 24) wenigstens je vier Spannelemente (28) aufweisen und in Schritten b) und d) zwei nebeneinanderliegende Spannelemente bewegt werden, und wobei folgende Schritte nach Durchführen des Längsschnittes ausgeführt werden:
f)Zwei diametral gegenüberliegende Spannelemente (69, 70) des anderen Halterungskopfes (24) werden zurückgezogen, wobei die Teile (65, 66) des Werkstücks durch die anderen, nicht zurückgezogenen Spannelemente (71, 72) in ihrer Position festgehalten werden;
g)die Spannelemente der Halterungsköpfe werden relativ zum Trennelement (60) um eine gemeinsame Achse gedreht, wobei sich das Trennelement zwischen den zurückgezogenen Spannelementen und dem Werkstück hindurchbewegt, um eine neue, gegenüber den bestehenden Schnitten gedrehte Schnittrichtung im Werkstück einzunehmen;
h)die zurückgezogenen Spannelemente (69, 70) werden wieder in Anlage an das Werkstück gebracht;
i)durch gleichzeitiges oder aufeinanderfolgendes Zurückziehen weiterer Spannelemente und relatives Bewegen des Trennelementes durch die jeweils entstehenden Spalten zwischen den zurückgezogenen Spannelementen und der Werkstückoberfläche zum Rand des Werkstücks hin wird das Trennelement aus dem durch die Spannelemente definierten Bereich herausgefahren;
um einen Längsschnitt ausführen zu können, der gegenüber den vorangehenden Schnitten bezüglich der Längsachse des Werkstücks gedreht ist.

12. Verwendung gemäss Anspruch 11, **dadurch gekennzeichnet, dass** genau eine Drehung gemäss Schritt g) um 90° durchgeführt, um das Werkstück in vier säulenförmige Teile (5) in Längsrichtung zu zerlegen.
